Europäisches Patentamt

European Patent Office

Office européen des brevets

(11) Veröffentlichungsnummer: **0 197 590**
**A1**

(12) # EUROPÄISCHE PATENTANMELDUNG

(21) Anmeldenummer: 86200507.1

(51) Int. Cl.⁴: **G 11 B 7/26**

(22) Anmeldetag: 26.03.86

(30) Priorität: 29.03.85 DE 3511712

(43) Veröffentlichungstag der Anmeldung:
15.10.86 Patentblatt 86/42

(84) Benannte Vertragsstaaten:
AT BE CH DE FR GB IT LI LU NL SE

(71) Anmelder: POLYGRAM GmbH
Glockengiesserwall 3
D-2000 Hamburg 1(DE)

(84) Benannte Vertragsstaaten:
DE

(71) Anmelder: Polygram International Holding B.V.
Gerrit van der Veenlaan 4
NL-3743 DN Baarn(NL)

(84) Benannte Vertragsstaaten:
BE CH FR GB IT LI LU NL SE AT

(72) Erfinder: Benne, Karsten
Im Hellerlok 15
D-3003 Ronnenberg 1(DE)

(72) Erfinder: Koop, Hermann, Dr.
Bachstelzenweg 10
D-3003 Ronnenberg 1(DE)

(72) Erfinder: Schüddekopf, Hans
Forstgrund 22
D-3000 Hannover 61(DE)

(74) Vertreter: Kupfermann, Fritz-Joachim
Philips Patentverwaltung GmbH Billstrasse 80 Postfach
10 51 49
D-2000 Hamburg 28(DE)

(54) Plattenförmiger Informationsträger und Verfahren zu seiner Herstellung.

(57) Die Erfindung bezieht sich auf optisch in Reflexion auslesbare plattenförmige Informationsträger, die einen ringförmigen Informationsbereich aufweisen, der durch einen konzentrischen Innenbereich und einen konzentrischen Außenbereich begrenzt ist. Der Informationstäger ist aus einem transparenten Substrat aufgebaut und weist eine Ausleseseite und eine dieser abgewandte Gegenseite auf, die wenigstens im Informationsbereich mit einer Reflexionsschicht versehen ist. Der Informationsträger reflektiert im Außenbereich von der Ausleseseite her auftreffendes Licht wenigstens teilweise diffus bzw. absorbiert das Licht. Auf diese Weise werden Fertigungsfehler, wie z. B. Einschlüsse, Inhomigenitäten etc., wenigstens teilweise abgedeckt oder kaschiert.

FIG. 2

EP 0 197 590 A1

Plattenförmiger Informationsträger und Verfahren zu seiner
Herstellung

Die Erfindung bezieht sich auf einen optisch in Reflexion
auslesbaren plattenförmigen Informationsträger, beispielsweise Laser-Videoplatte (VLP) oder digitale Audioplatte
(CD), mit einem ringförmigen Informationsbereich, der
begrenzt ist durch einen konzentrischen Innenbereich und
einen konzentrischen Außenbereich, wobei der Informationsträger aus einem transparenten Substrat aufgebaut ist, das
eine Ausleseseite und eine dieser abgewandte Gegenseite
aufweist, die wenigstens im ringförmigen Informationsbereich mit einer Reflexionsschicht versehen ist.

Optisch in Reflexion auslesbare plattenförmige
Informationsträger sind z. B. als Compact-Discs auf dem
Markt erhältlich, die mit digitaler Audio-Information
versehen sind. Weiter sind mit Videosignalen versehene
Platten (VLP) bekannt sowie mit Daten versehene Platten
(CD-ROM). Darüber hinaus sind auch beschreibbare
Informationsträger bekannt, bei denen in die Reflexionsschicht mittels Lichtstrahl Informationen eingeschrieben
werden können. Derartige Platten werden als optische
Speicherplatten verwendet.

Bei derartigen plattenförmigen Informationsträgern besteht
das Substrat aus einem transparenten Kunststoff, der mit einer Reflexionsschicht versehen ist. Der Kunststoff kann dabei beispielsweise aus Polycarbonat oder Polymethylmetacrylat bestehen. Die Platten werden in einem Spritz- oder Spritzpreßverfahren hergestellt. Hierbei wird die eigentliche Information, bzw. bei beschreibbaren Platten die Spurinformation oder ähnliches, auf wenigstens einer Seite in Form einer Mikrostruktur in die Plattenoberfläche eingeprägt. Alternativ ist es auch möglich, ein flaches Substrat zu verwenden, das mit einem bei Bestrahlung mit UV-Licht aushärtenden Lack versehen ist, der im noch flüssigen Zustand mit einer Matrize in Kontakt gebracht wird und der beim Aushärten des Lackes die in der Matrize vorhandene Mikrostruktur übernimmt. Um die Mikro-Informationsstruktur in Reflexion auslesen zu können, wird die Platte auf ihrer Gegenseite mit einer Reflexionsschicht versehen.

Die die Mikro-Informationsstruktur aufweisenden Matrizen sind bei Massenfertigung der Informationsträger meistens von einem sogenannten Master abgeleitete Galvanos. Es können auch Kunststoff-Matrizen sein. Einfachheitshalber wird weiter nur von Galvanos gesprochen. Für den Master wird als Substrat vielfach eine Glasplatte verwendet, die zunächst mit einer Fotoresistschicht überzogen wird. Diese Fotoresistschicht wird mittels eines auf die Schicht fokussierten und mit der Information modulierten Laserstrahls belichtet und anschließend entwickelt, wobei in der Regel die belichteten Anteile aus der Fotoresistschicht entfernt werden. Der fertige Master wird elektrisch leitfähig gemacht, und anschließend wird von dem Master in einem galvanischen Bad ein erstes Galvano (Vater-Galvano) gezogen. Dieses Vater-Galvano kann unmittelbar als Preßmatrize Verwendung finden. In der Regel werden jedoch vom Vater-Galvano zunächst ein weiteres Galvano (Mutter-Galvano) und vom Mutter-Galvano weitere Galvanos gezogen und erst diese als Preßmatrizen verwendet.

Bei Einzelfertigung oder bei Fertigung sehr kleiner Serien ist es auch möglich, die Informationsstruktur nicht über eine Matrize in den Informationsträger einzubringen, sondern durch Beschreiben des Informationsträgers selbst.

Bei der Herstellung solcher plattenförmigen Informationsträger müssen sehr hohe Anforderungen nicht nur an die Genauigkeit der auf die Platte zu übertragenden Mikro-Informationsstruktur, sondern auch an die Homogenität des Substratmaterials und die Fehlerfreiheit der Schichtflächen gestellt werden.

Wie die Praxis zeigt, lassen sich derartige Fehler nicht grundsätzlich beseitigen, so daß ein recht beachtlicher Teil der Produkte bei der Fertigung als Ausschuß entfällt. Besonders kritisch ist in diesem Zusammenhang der Außenbereich der Informationsträger, weil bei der Fertigung in den äußeren Randbereichen im Material leicht Inhomogenitäten, u. a. auch in Form von feinen Lufteinschlüssen auftreten. Dies kann beispielsweise bei der Fertigung der Informationsträger mittels Spritzen oder Spritzpressen dadurch auftreten, daß das eingespritzte Material beim Auspressen sich in radialer Richtung ungleichmäßig abkühlt. Auch lassen sich bei der Handhabung solcher Platten im Fertigungsablauf mitunter Oberflächenkratzer, die dann auch oft im äußeren Bereich der Plattenflächen auftreten, nicht vermeiden. Nachteilig wirkt sich in diesem Zusammenhang aus, daß bei gegebenenfalls vorhandener metallischer Reflexionsschicht durch deren Spiegelwirkung solche Fehler für den Betrachter besonders deutlich hervortreten.

Es ist Aufgabe der Erfindung, solche plattenförmigen Informationsträger so zu gestalten, daß insbesondere bei relativ großem Außenbereich in diesem vorhandene Fehler nicht deutlich hervortreten. Gerade für plattenförmige Informationsträger mit relativ kleinem Informationsbereich ist es wünschenswert, diese optisch ansprechend zu gestalten. Bei voll verspiegelter Gegenseite treten die oben erwähnten Fertigungsfehler besonders deutlich hervor, da Einschlüsse und Fehler in dem Substrat durch die Reflexionsschicht nochmals reflektiert werden und so besonders deutlich fürs Auge sichtbar werden. Darüber hinaus ist es Aufgabe der Erfindung, den infolge der oben beschriebenen Fehler auftretenden Ausschuß zu verringern.

Diese Aufgabe ist erfindungsgemäß dadurch gelöst, daß von der Ausleseseite gesehen der Informationsträger im Außenbereich auftreffendes Licht wenigstens teilweise diffus reflektiert und/oder absorbiert, so daß das Aussehen des Informationsträgers beeinträchtigende optische Effekte, wie z. B. Einschlüsse, Inhomogenitäten, von der Ausleseseite sichbare Bedruckung der Gegenseite usw., wenigstens teilweise abgedeckt oder kaschiert werden.

Bei plattenförmigen Informationsträgern nach der Erfindung werden die auftretenden Fehler also kaschiert, so daß sie nicht sichtbar werden. Es ist nicht erforderlich, das Auftreten der Fehler selbst zu vermindern. Die Ausschußrate bei diesen Informationsträgern ist geringer als bei vollständig bespielten bzw. solchen mit nicht kaschiertem Außenbereich, da auch Informationsträger, welche im Außenbereich Fehler aufweisen, nicht zum Ausschuß zu zählen sind. Dies stellt einen Beitrag zur Erhöhung der Wirtschaftlichkeit der Herstellung der Informationsträger dar, auch wenn die Maßnahmen nach der Erfindung einen erhöhten Aufwand bei der Herstellung nach sich ziehen. Auf diese Weise ist es, insbesondere bei Informationsträgern mit relativ kleinem Informationsbereich, möglich, ein besonders attraktives optisches Aussehen zu erreichen, und zwar ohne erhöhte Stückzahlkosten.

Es ist vorgesehen, z. B. Compact-Discs mit einer Spieldauer von ca. 10 bis 15 min. auf den Markt zu bringen, welche Werbezwecken dienen und besonders attraktiv aussehen sollen. Gerade solche Compact-Discs sollen besonders preiswert angeboten werden können.

Darüber hinaus kann es zweckmäßig sein, auch den Innenbereich zu kaschieren. Eine Mattierung des Innenbereiches ist an sich aus der DE-AS 26 39 118 bekannt. Dort wird eine Aufrauhung der Preßmatrize vorgenommen, die eine Mattierung des Innenbereiches des gefertigten Informationsträgers zur Folge hat. Diese Aufrauhung ist dort vorgesehen, um Verunreinigungen des Substratmaterials beim Pressen nicht in die Außenbereiche gelangen zu lassen. Es geht dort nicht darum, Verunreinigungen zu maskieren. Die aufgerauhten Bereiche der Matrize sollen verhindern, daß evtl. in der Substratmasse vorhandene Festpartikel beim Pressen in die Außenbereiche gelangen.

0197590

In einer vorteilhaften Ausgestaltung kann eine Preßmatrize nach der DE-AS 26 39 118 kombiniert werden mit den Maßnahmen nach der vorliegenden Erfindung. Auf diese Weise werden zum einen das Auftreten von Verunreinigungen im Informations- und im Außenbereich vermindert und zum anderen im Außenbereich vorhandene Fertigungsfehler kaschiert.

Nach einer weiteren Ausgestaltung der Erfindung ist vorgesehen, daß der Außenbereich des Informationsträgers auf der Auslese- und/oder Gegenseite ganz oder teilweise matt ausgeführt ist, bedruckt ist oder mit wenigstens einem Aufkelber versehen ist.

Es ist an sich bekannt, den Außenbereich des Informationsträgers nicht zu verspiegeln. Eine selektive Verspiegelung des Informationsbereiches und die Maßnahmen nach der Erfindung ergeben eine breite Palette von gestalterischen Möglichkeiten.

So kann z. B. bei nicht verspiegeltem Außenbereich auf der Gegenseite ein Aufdruck vorgesehen sein, der auch von der Ausleseseite durch das Substrat hindurch sichtbar ist. Es kann auch auf der Gegenseite eine Mattierung mit evtl. einem darauf aufgebrachten Lack vorgesehen sein. Die Mattierung ist dann ebenfalls von der Ausleseseite her sichtbar und kann gegebenenfalls wiederum als Untergrund für eine auf der Ausleseseite im Außenbereich aufgebrachte Bedruckung dienen.

Bei voll verspiegelten Informationsträgern können sowohl die Gegenseite wie auch die Ausleseseite im Außenbereich

0197590

mattiert ausgeführt sein, teilweise bedruckt sein oder auch mit wenigstens einem Aufkleber versehen sein. Es ist auch eine Kombination dieser Maßnahmen möglich.

Die Maßnahmen nach der Erfindung können auch kombiniert werden mit einer auf der Gegenseite angebrachten, aus wenigstens einer Farbe aufgebauten Schutzschicht, wie dies an sich aus der EP-Patentanmeldung 70 031 (PHD 81-476 EP) bekannt ist.

Damit sich bei der Abtastung der Informationsplatte durch einen Laser keine Probleme ergeben, ist nach einer weiteren Ausgestaltung der Erfindung vorgesehen, daß zwischen dem Informationsbereich und den konzentrischen Innen- und Außenbereichen eine Übergangszone vorgesehen ist. Diese dient dazu, zu verhindern, daß der Laserstrahl bei der Abtastung auf den Innen- bzw. Außenbereich gerät.

Nach einer weiteren Ausgestaltung der Erfindung wird ein Verfahren zum Mattieren eines plattenförmigen Informationsträgers vorgeschlagen, das dadurch gekennzeichnet ist, daß die mattierten Bereiche des Informationsträgers mittels Mattieren entsprechender Bereiche entweder der für die Herstellung der Matrizen vorgesehenen Urplatte (Master) oder einer hiervon abgeleiteten Matrize und/oder gegebenenfalls der Oberfläche der Blindformhälfte der Spritzguß- bzw. Spritzpreßform erzeugt werden.

Das Anbringen einer Mattierung in der Urplatte oder einem von dieser abgeleiteten Matrize ist besonders wirtschaftlich, da diese Mattierung nur einmal vorgenommen werden muß und nicht erneut an jedem gefertigten Informationsträger von neuem anzubringen ist. Werden von dem Master nacheinander mehrere Matrizen abgeleitet, so kann die Mattierung an einer dieser Matrizen vorgenommen werden.

Die Patentansprüche 8 bis 12 enthalten die speziellen Ausgestaltungen der in dem Patentanspruch 7 angegebenen verschiedenen Mattierungsmöglichkeiten.

Die Erfindung wird anhand der Zeichnung näher erläutert. Es zeigen:

Fig. 1 einen plattenförmigen Informationsträger in Aufsicht auf die Ausleseseite,

Fig. 2 einen Informationsträger nach Fig. 1, an dem beispielhaft einige Maßnahmen nach der Erfindung dargestellt sind,

Fig. 3 bis 7 die schematische Darstellung der Herstellung eines Masters und des daraus abgeleiteten Vater-Galvanos,

Fig. 8 bis 9 die schematische Darstellung der Herstellung mattierter Teilbereiche im Zuge der Herstellung eines Masters,

Fig. 10 bis 11 die schematische Darstellung einer weiteren Herstellung mattierter Teilbereiche bei einem von einem Master bzw. von einem Vater- oder Mutter-Galvano abgeleiteten Galvano,

Fig. 12 eine weitere Herstellungsmöglichkeit mattierter Teilbereiche bei einem Master bzw. einem hiervon abgeleiteten Galvano,

Fig. 13 die schematische Darstellung der Herstellung einer Mattierung bei der Blindform einer für die Herstellung von plattenförmigen Informationsträgern verwendeten Spritz-Preßform,

Fig. 14 und 15 die schematische Darstellung der Herstellung mattierter Teilbereiche bei einem fertigen Master, einem hiervon abgeleiteten Galvano oder einem bereits durch Spritzpressen hergestellten plattenförmigen Informationsträger.

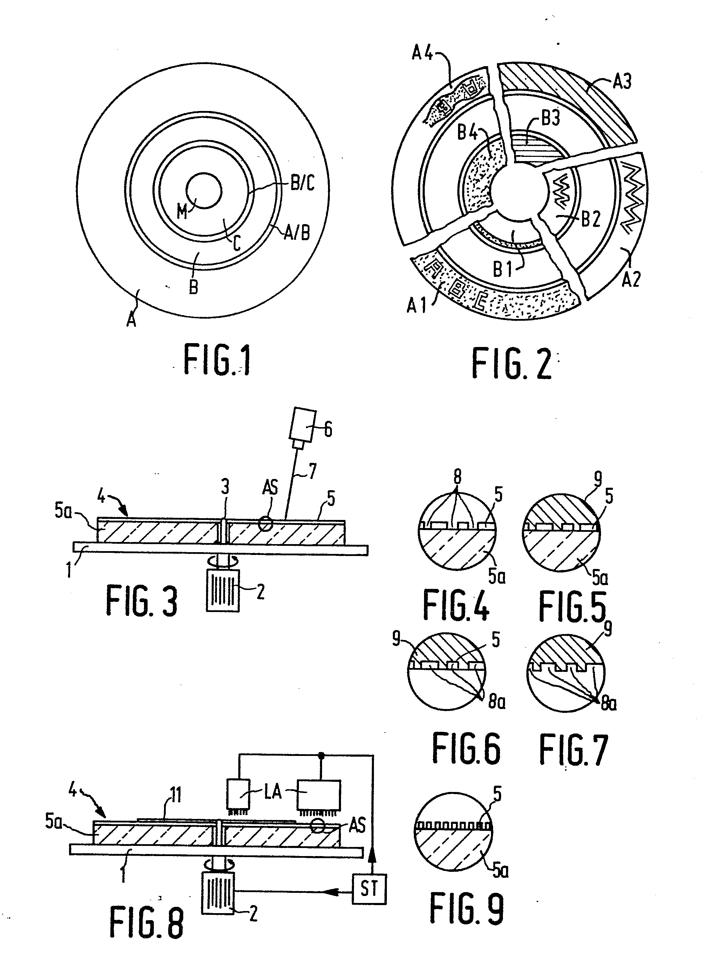

Die Fig. 1 und 2 zeigen die Aufsicht auf die Ausleseseite eines optisch in Reflexion auslesbaren plattenförmigen Informationsträgers, wie er beispielsweise in Gestalt der CD in den Handel gekommen ist. Die Ausleseseite des plattenförmigen Informationsträgers ist in einen Außenbereich A, einen Mittenbereich B und einen Innenbereich C unterteilt, die jeweils durch schmale Ringzonen A/B und B/C voneinander getrennt sind. Die gespeicherte Information ist im Mittenbereich B in Gestalt einer Mikro-Informationsstruktur angeordnet, die aus einer Spirallochspur besteht. Die Mikro-Informationsstruktur ist hierbei von der Gegenseite aus in die Plattenoberfläche eingeprägt und diese Plattenseite außerdem mit einer metallischen Reflexionsschicht und einer Schutzlackschicht abgedeckt.

Der eine Kreisfläche darstellende Mittenbereich B ist relativ schmal und zeigt damit an, daß die eingespeicherte Information etwa für eine Spielzeit von 15 bis 20 min. ausreicht. Plattenförmige Informationsspeicher dieser Art kommen überall dort in Betracht, wo ein ganz bestimmter begrenzter Informationsinhalt, beispielsweise ein Schlagerhit, möglichst preiswert im Handel angeboten werden soll. Um hier die Ausschußzahlen gerade auch im Hinblick auf die Preisgestaltung bei der Fertigung möglichst klein zu halten, weist der Außenbereich A und der Innenbereich C eine Mattierung auf, die evtl. hier vorhandene Fehlerstellen und Oberflächen-Inhomogenitäten in vorteilhafter Weise kaschiert.

Bei dem in Fig. 1 dargestellten Informationsträger sind zwecks dieser Kaschierung der Innenbereich C und der Außenbereich A matt ausgeführt. Diese Mattierung kann dabei nach einer der beschriebenen Maßnahmen auf den Informationsträger selbst oder auf den Master bzw. einer von ihm abgeleiteten Matrize aufgebracht sein.

Zur Demonstration einiger Möglichkeiten der Kombination der Maßnahmen zur Kaschierung ist der in Fig. 2 ebenfalls in Aufsicht auf die Ausleseseite dargestellte Informationsträger in vier Sektoren unterteilt; in jedem dieser Sektoren ist jeweils eine von vielen Kombinationsmöglichkeiten dargestellt. Selbstverständlich wird im Regelfalle eine solche Unterteilung in Sektoren, die hier nur der Demonstration dient, nicht vorgenommen werden.

In dem ersten Sektor ist der Innenbereich B1 voll verspiegelt, wie dies normalerweise bei Compact-Discs der Fall ist. Der Außenbereich Al ist ebenfalls verspiegelt, jedoch zusätzlich auf der in Ansicht dargestellten Ausleseseite mattiert ausgeführt. Auf diese Mattierung ist weiterhin ein Schriftzug aufgedruckt. In dem Außenbereich Al evtl. vorhandene, optisch hervortretende Fertigungsfehler sind so sicher kaschiert.

Dieses gilt auch für die weiteren Sektoren, welche exemplarisch zeigen:

A2, B2: auf den Innen- und Außenbereich aufgedruckte Muster, Bilder oder ähnliches. Der Untergrund kann dabei z. B. ein anderer Farbaufdruck oder eine Mattierung sein.

A3, B3: Innen- und Außenbereich sind mit einem Farbaufdruck versehen oder zeigen in Durchsicht einen Farbaufdruck auf die andere Seite.

A4:     Der Außenbereich ist teilweise in Form einer Struktur mattiert. In diesen Matt-Strukturen sind Schriftzeichen oder Symbole ausgespart.

B4:     Der Innenbereich ist matt ausgeführt.

Die Farb-Aufdrucke auf Innen- und/oder Außenbereichen des Informationsträgers können z. B. im Tampon-Druck-Verfahren vorgenommen worden sein.

Zum besseren Verständnis der Fertigungsmöglichkeiten für solche plattenförmigen Informationsträger mit mattierten Teilbereichen soll anhand der Fig. 3 zunächst die Herstellung der für das Spritzpressen erforderlichen Preßmatrizen kurz beschrieben werden.

Fig. 3 zeigt auf einem Drehteller 1, der mit dem Antrieb 2 in eine Drehbewegung versetzt wird, auf einem Dorn 3 einen zu fertigenden Master 4 in Gestalt einer Glasplatte 5a, die an ihrer Oberseite mit einer Fotoresistschicht 5 abgedeckt ist. Über der Glasplatte 5a mit der Fotoresistschicht 5 ist eine Laserlichtquelle 6 angeordnet, deren Strahl 7 auf die Fotoresistschicht 5 fokussiert und von der zu speichernden Information in seiner Intensität moduliert ist. Der modulierte Laserlichtstrahl 7 schreibt während der Drehbewegung des Drehtellers 1 eine spiralförmige Belichtungsspur in die Fotoresistschicht, die anschließend entwickelt wird, wobei die belichteten Anteile aus der Fotoresistschicht herausgelöst werden. Damit ist der Master 4 erstellt. Ein in Fig. 3 dargestellter kleiner Ausschnitt AS soll im Zusammenhang mit den Fig. 4 bis 7 die aufeinander folgenden Verfahrensschritte noch näher erläutern.

Fig. 4 zeigt im Ausschnitt AS die entwickelte Fotoresistschicht 5, die an den belichteten Stellen 8 die Oberfläche der Glasplatte 5a freigibt. Nachdem der Master 4 auf seiten der entwickelten Fotoresistschicht elektrisch leitend gemacht ist, wird vom Master 4 ein Vater-Galvano 9 gezogen, wie das der Ausschnitt AS nach Fig. 5 zeigt. Nach Trennen des Vater-Galvanos 9 von der Glasplatte 5a entsprechend Fig. 6 müssen nunmehr noch Reste der entwickelten Fotoresistschicht 5 aus den Vertiefungen 8a des Vater-Galvanos 9 entfernt werden. Fig. 7 zeigt schließlich im Ausschnitt AS das fertige Vater-Galvano 9.

Das Vater-Galvano 9 kann bereits als Preßmatrize Verwendung finden. Für die Herstellung mehrerer Preßmatrizen wird jedoch üblicherweise von diesem Vater-Galvano 9 ein Mutter-Galvano gezogen und von diesem dann weitere Galvanos hergestellt, die die eigentlichen Preßmatrizen darstellen.

Um die Mattierung des Außenbereichs A und gegebenenfalls auch des Innenbereichs C der Ausleseseite des gepreßten fertigen Informationsträgers herbeizuführen, können entsprechende Mattierungen bei Teilbereichen sowohl des Masters als auch eines Galvanos oder dem fertigen gepreßten Informationsträger vorgenommen werden.

Eine bevorzugte Möglichkeit besteht darin, die für die Informationsspeicherung verwendete Fotoresistschicht 5 bei der Herstellung des Masters 4 für die gewünschte Mattierung auszunutzen. Hierzu ist es lediglich erforderlich, die dem Innen- und Außenbereich entsprechenden Teilbereiche der Fotoresistschicht 5 mittels des Lasers 6 nach Fig. 3 in gleicher Weise wie den die eigentliche Information aufnehmenden Mittenbereich zu bearbeiten. Hierzu wird der Laser 6 in seiner Strahlintensität mit einer geeigneten Mattierungsinformation moduliert. Nach Abschluß der verschiedenen Belichtungsvorgänge kann dann die Fotoresistschicht 5 in einem Arbeitsgang entwickelt werden und vom fertigen Master 4 das Vater-Galvano 9 gezogen werden, wie das bereits anhand der Fig. 4 bis 7 erläutert worden ist.

Auf die gleiche Weise kann auch eine Blindmatrize von einem Blindmaster erstellt werden, mit der bei Informationsträgern mit Informationen nur auf einer Seite die gewünschte Mattierung des Untergrundes auf der Gegenseite herbeigeführt wird.

Die durch die Mattierungsinformation erreichte Rasterstruktur der Fotoresistschicht 5 kann recht verschieden gestaltet sein. Eine bevorzugte Rasterstruktur stellt ein gleichförmiges Lochraster dar, das einen Lochdurchmesser und einen gegenseitigen Lochabstand in der Größenordnung weniger μ bei einer Lochtiefe von etwa 1 μ aufweist.

Fig. 8 zeigt eine andere Möglichkeit im Zusammenhang mit einem Master 4, bei dem im Zuge der Belichtung der Fotoresistschicht 5 durch den modulierten Laserstrahl gleichzeitig oder unmittelbar im Anschluß daran die zu mattierenden Bereiche mittels Lichtanordnungen LA im Sinne eines Lichtfeinrasters belichtet werden. Hierzu ist dann der Mittenbereich durch eine Maske abgedeckt. Die Feinrasterbelichtung der Lichtanordnungen LA wird dabei in Abhängigkeit der Steuerung des Antriebs 2 für den Drehteller 1 mittels einer Steuereinrichtung ST gesteuert. Den in Fig. 8 entsprechend Fig. 3 angegebenen Ausschnitt AS verdeutlicht der in Fig. 9 angegebene Ausschnitt. Entsprechend Fig. 4 zeigt Fig. 9 das Feinlichtraster in Gestalt der entwickelten Fotoresistschicht 5, das im Rahmen dieses Feinrasters die Oberfläche der Glasplatte 5a in Form eines Punktrasters freilegt. Die auf diese Weise gewonnene Mattierung des Außenbereichs A und des Innenbereichs C entsprechend Fig. 1 wird bei der Ableitung der Galvanos vom Master 4 auf die Galvanos übertragen und findet sich dann auch beim Pressen der plattenförmigen Informationsträger auf diesem wieder.

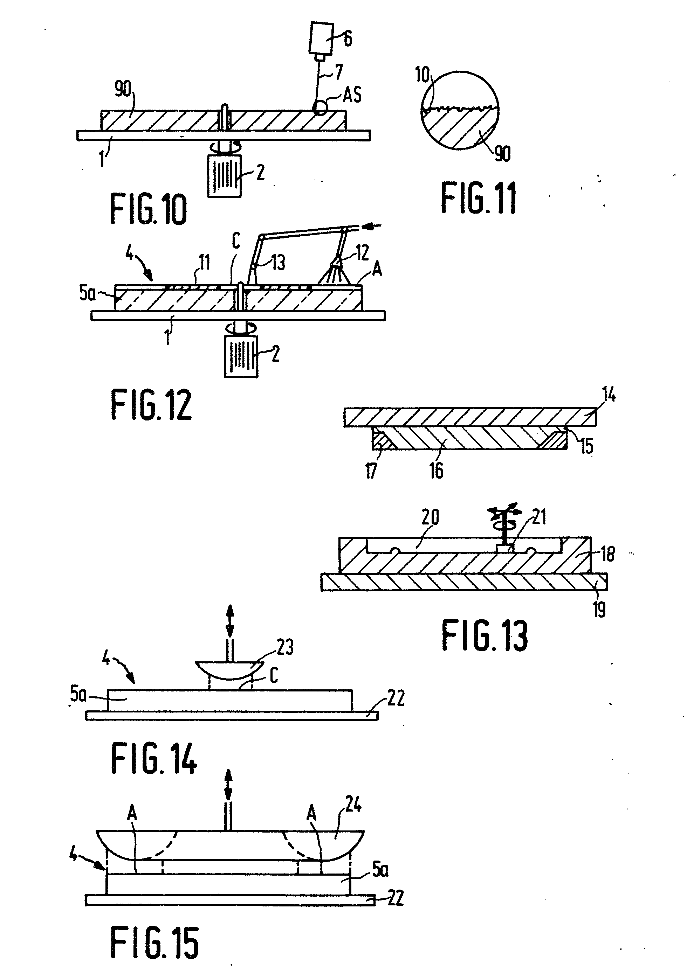

Das Erzeugen der Mattierung im Außenbereich A und im Innenbereich C auf der Auslese und/oder Gegenseite eines fertigen Informationsträgers nach Fig. 1 kann auch dadurch herbeigeführt werden, daß das von einem Master 4 bzw. einem Vater- oder Muttergalvano abgeleitete Galvano 90 auf einen Drehteller 1 aufgebracht wird und die entsprechenden Bereiche mittels eines energiereichen, auf die Galvano-Oberfläche fokussierten Laserstrahls 7, der eine für die gewünschte Rasterung erforderliche gleichförmige Intensitätsmodulatin aufweist, in Form einer Kreis- oder Spiralspur ein Raster von Anschmelzungen im Außenbereich A und im Innenbereich C erzeugt. Die dem Ausschnitt AS entsprechende Ausschnittsdarstellung des auf diese Weise mattierten Galvanos 90 zeigt Fig. 11. Die Oberfläche des Galvanos 90 ist hier lediglich angeschmolzen, und die Anschmelzlöcher 10 weisen dabei zu beiden Seiten eine kleine Wallbildung auf.

Eine weitere Möglichkeit zeigt Fig. 12, bei der die Glasplatte 5a des fertigen Masters 4 im Mittenbereich B nach Fig. 1 mit einer Abdeckmaske 11 versehen ist und der Innenbereich C und der Außenbereich A bei Drehung der Glasplatte 5a über Düsen 12 und 13 mit einem Mattlack besprüht werden.

Es ist festzustellen, daß das für einen Master 4 gezeigte Ausführungsbeispiel nach Fig. 12 in gleicher Weise auf vom Master abgeleitete Galvanos, wie auch auf den bereits gepreßten Informationsträger angewendet werden kann.

Bei der Herstellung von Informationsträgern, die lediglich von einer Seite ausgelesen werden können und bei denen somit die Information mittels einer Preßmatrize auch nur von einer Seite in die Oberfläche des Informationsträgers eingeprägt werden muß, kann üblicherweise für die zweite Preßformhälfte auf eine besondere Preßmatrize verzichtet werden. Fig. 13 zeigt eine solche Preßform. Die an einer Hubplatte 14 befestigte obere Preßformhälfte 15 weist eine Matrize 16 auf, die über den seitlichen konischen Rand der oberen Preßformhälfte hinweg mit dieser über einen Spannring 17 verspannt ist. In gleicher Weise ist die untere Preßformhälfte 18 an einer im allgemeinen feststehenden Platte 19 befestigt. Sie weist keine Preßmatrize auf und stellt eine sogenannte Blindformhälfte dar, deren eigentliche Preßfläche 20 beispielsweise mit mechanischen Mitteln durch Schleifen so aufgerauht wird, daß der gewünschte Mattierungseffekt auf der Etikettseite der gepreßten Informationsplatte auftritt. Zum Aufrauhen kann, wie das in Fig. 13 angedeutet ist, eine Schleifscheibe 21 verwendet werden, die frei beweglich über die Preßfläche 20 der unteren Preßformhälfte 18 geführt werden kann.

Bei Verwenden eines Mattlacks zum Mattieren der vorgegebenen Teilbereiche kann auch von sogenannten Tampo-Print-Verfahren Gebrauch gemacht weden. Die Fig. 14 und 15 zeigen dieses Druckverfahren in seiner Anwendung auf den Außenbereich A und den Innenbereich C nach Fig. 2. Die zu bedruckende Platte, die hier wieder nur beispielsweise eine Glasplatte 5a eines Masters 4 ist, wird im Mittenbereich mit Hilfe eines Tampons 23, der eine Hub-Translationsbewegung ausführen kann, bedruckt. Der Tampon 23 nimmt zunächst von einem außerhalb der Glasplatte 5a angeordneten Lackmagazin den Mattlack auf, fährt dann über die Glasplatte 5a und gibt dann in einer Hubbewegung den Lack an den Innenbereich C ab. Eine entsprechende Darstellung für das Aufdrucken des Mattlacks im Außenbereich A zeigt Fig. 15. Der Tampon 24 hat hier einen dem Außenbereich angepaßten Ringquerschnitt, so daß auch hier in einem Arbeitsgang der Außenbereich A bedruckt werden kann.

Die Erfindung kann mit Vorteil in der Massenherstellung von plattenförmigen, optisch auslesbaren Informationsträgern überall dort zur Anwendung kommen, wo der fertige Informationsträger größere Teilbereiche aufweist, deren Spiegelflächen für das Auslesen der Information in Reflexion nicht benötigt werden. Besonders vorteilhaft ist die Anwendung bei der Fertigung von preisgünstigen CDs relativ kurzer Spielzeit.

0197590

PATENTANSPRÜCHE

1. Optisch in Reflexion auslesbarer plattenförmiger Informationsträger, beispielsweise Laser-Videoplatte (VLP) oder digitale Audioplatte (CD), mit einem ringförmigen Informationsbereich, der begrenzt ist durch einen konzentrischen Innenbereich und einen konzentrischen Außenbereich, wobei der Informationsträger aus einem transparenten Substrat aufgebaut ist, das eine Ausleseseite und eine dieser abgewandte Gegenseite aufweist, die wenigstens im ringförmigen Informationsbereich mit einer Reflexionsschicht versehen ist, dadurch gekennzeichnet, daß von der Ausleseseite gesehen der Informationsträger im Außenbereich auftreffendes Licht wenigstens teilweise diffus reflektiert und/oder absorbiert, so daß das Aussehen des Informationsträgers beeinträchtigende optische Effekte, wie z. B. Einschlüsse, Inhomogenitäten, von der Ausleseseite sichtbare Bedruckung der Gegenseite usw., wenigstens teilweise abgedeckt oder kaschiert werden.

2. Informationsträger nach Anspruch 1, dadurch gekennzeichnet, daß der Außenbereich auf der Auslese- und/oder Gegenseite ganz oder teilweise matt ausgeführt ist.

3. Informationsträger nach Anspruch 1, dadurch gekennzeichnet, daß der Außenbereich auf der Auslese- und/oder Gegenseite ganz oder teilweise bedruckt ist.

4. Informationsträger nach Anspruch 1, dadurch gekennzeichnet, daß der Außenbereich auf der Auslese- und/oder Gegenseite ganz oder teilweise mit wenigstens einem Aufkleber versehen ist.

5. Informationsträger nach mehreren der Ansprüche 2 bis 4, dadurch gekennzeichnet, daß auf Auslese- und/oder Gegenseite verschiedene Kombinationen der Maßnahmen nach den Ansprüchen 2 bis 4 vorgesehen sind.

6. Informationsträger nach einem oder mehreren der Ansprüche 1 bis 5, dadurch gekennzeichnet, daß zwischen dem Informationsbereich und den konzentrischen Innen- und Außenbereichen eine Übergangszone vorgesehen ist.

7. Verfahren zum Mattieren eines plattenförmigen Informationsträgers nach einem oder mehreren der vorhergehenden Ansprüche, dadurch gekennzeichnet, daß die mattierten Bereiche des Informationstägers mittels Mattieren entsprechender Bereiche entweder der für die Herstellung der Matrizen vorgesehenen Urplatte (Master 4) oder einer hiervon abgeleiteten Matrize (9) und gegebenenfalls der Oberfläche der Blindformhälfte der Spritzguß- bzw. Spritzpreßform (15, 18) erzeugt werden.

8. Verfahren nach Anspruch 7, dadurch gekennzeichnet, daß das Mattieren entsprechender Bereiche des Masters (4) oder einer hiervon abgeleiteten Matrize (9) durch Ätzen, Anlösen, Beschichten oder mechanisches Aufrauhen vorgenommen wird.

9. Verfahren nach Anspruch 8, dadurch gekennzeichnet, daß das Mattieren entsprechender Bereiche eines Masters (4) aus Glas unter Verwendung einer Abdeckmaske durch Ätzen mit einem Flußsäure/Salpetersäuregemisch vorgenommen wird.

10. Verfahren nach Anspruch 7 oder 8, dadurch gekennzeichnet, daß das Beschichten durch Auftragen eines Mattlacks vorgenommen wird.

11. Verfahren nach Anspruch 10, dadurch gekennzeichnet, daß der auf eine Master- oder Teilfläche aufgetragene Mattlack elektrisch leitfähig ist.

12. Verfahren nach Anspruch 10 oder 11, dadurch gekennzeichnet, daß der Mattlack aufgedruckt wird, vorzugsweise unter Anwendung eines Tampo-Print-Verfahrens.

13. Verfahren nach Anspruch 7 oder 8, dadurch gekennzeichnet, daß das mechanische Aufrauhen durch rasterförmiges Anschmelzen der betreffenden Oberflächenbereiche mittels eines Lasers (6) vorgenommen wird.

14. Verfahren nach Anspruch 7, dadurch gekennzeichnet, daß das Mattieren entsprechender Bereiche eines unter Anwendung einer von einem signalmodulierten Laser (6) belichteten Fotoresistschicht (5) Gebrauch machenden Masters (4) über eine spezielle Feinrasterbelichtung der entsprechenden Bereiche der Fotoresistschicht bei gleichzeitigem Abdecken der hiervon nicht betroffenen Bereiche mit einer Maske und anschließendem alkalischen Entwickeln der belichteten Fotoresistschicht herbeigeführt wird.

15. Verfahren nach Anspruch 7, dadurch gekennzeichnet, daß das Mattieren entsprechender Bereiche eines Masters mit einer Fotoresistschicht dadurch herbeigeführt wird, daß im Zuge des Einschreibens der digitalen Information durch Belichten der Fotoresistschicht mittels eines signalmodulierten Lasers auch der kreisringförmige Außenbereich der Fotoresistschicht in der gleichen Weise vom gleichen Laser belichtet wird, der hierbei in seiner Strahlintensität mit einer geeigneten Mattierungsinformation moduliert wird und daß die Fotoresistschicht nach Abschluß der verschiedenen Belichtungsvorgänge alkalisch entwickelt wird.

16. Verfahren nach Anspruch 15, dadurch gekennzeichnet, daß die Mattierungsinformation in der Fotoresistschicht (5) nach deren alkalischem Entwickeln ein gleichförmiges Lochraster mit einem Lochdurchmesser und einem gegenseitigen Lochabstand in der Größenordnung weniger µ bei einer Lochtiefe von etwa 1 µ aufweist.

FIG.1

FIG. 2

FIG. 3

FIG.4    FIG.5

FIG.6    FIG.7

FIG.8

FIG. 9

0197590

FIG.10

FIG.11

FIG.12

FIG.13

FIG.14

FIG.15

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 110 511  (DYSAN CORP.)<br><br>* Seite 2, Zeilen 12-32; Seite 7, Zeile 13 - Seite 8, Zeile 11; Seite 9, Zeile 24 - Seite 10, Zeile 13; Seite 10, Zeile 36 - Seite 11, Zeile 11 *<br><br>--- | 1,7-9, 13,14 | G 11 B   7/26 |
| D,A | EP-A-0 070 031  (POLYGRAM GmbH)<br><br>* Seite 5, Zeile 5 - Seite 6, Zeile 18; Figuren 1-12 *<br><br>--- | 1,3,4, 10,12 | |
| A | FR-A-2 181 403  (TED BILDPLATTEN AG)<br><br>* Seite 1, Zeilen 1-8; Seite 2, Zeile 24 - Seite 4, Zeile 2; Seite 5, Zeile 8 - Seite 7, Zeile 14; Figuren 1-9 *<br><br>--- | 1,2,7, 8,13, 15,16 | |
| A | FR-A-2 216 638  (POLYGRAM GmbH)<br><br>* Seite 1, Zeile 19 - Seite 2, Zeile 4 *<br><br>--- | 1,2,10 ,12 | RECHERCHIERTE SACHGEBIETE (Int. Cl 4)<br><br>G 11 B |
| D,A | DE-B-2 639 118  (POLYGRAM GmbH)<br>* Insgesamt *<br><br>---        -/- | 1,2,7 | |

Der vorliegende Recherchenbericht wurde für alle Patentansprüche erstellt

| Recherchenort<br>DEN HAAG | Abschlußdatum der Recherche<br>23-06-1986 | Prüfer<br>LEHNBERG C.R. |
|---|---|---|

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,A | EP-A-0 169 137  (LOGIVISION)<br><br>* Seite 5, Zeile 33 - Seite 10, Zeile 28; Figuren 1,2 *<br><br>----- | 1-4,6, 8-10, 12 | |
| | | | RECHERCHIERTE SACHGEBIETE (Int Cl 4) |

Der vorliegende Recherchenbericht wurde für alle Patentansprüche erstellt

| Recherchenort<br>DEN HAAG | Abschlußdatum der Recherche<br>23-06-1986 | Prüfer<br>LEHNBERG C.R. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82